# EUROPEAN PATENT SPECIFICATION

(11) **EP 1 916 916 B1**
(45) Date of publication and mention of the grant of the patent: **25.09.2013**
(21) Application number: 06795640.9
(22) Date of filing: 11.08.2006
(51) Int. Cl.: A23L 3/375, A23L 3/3418, A23L 3/36, A23B 7/055, A23B 7/148, A23B 7/04, F25D 17/04, F25D 17/06

(54) **A COOLING DEVICE**
KÜHLVORRICHTUNG
DISPOSITIF DE REFROIDISSEMENT

(30) Priority: 15.08.2005 TR 200503258
(43) Date of publication of application: 07.05.2008
(73) Proprietor: Arçelik Anonim Sirketi, 34950 Istanbul (TR)
(72) Inventor: AKDAG, Levent, 34950 Istanbul (TR); SEKER, Deniz, 34950 Istanbul (TR); KANDEMIR, Nihat, 34950 Istanbul (TR)
(86) International application number: PCT/IB2006/052785
(87) International publication number: WO 2007/020585

(56) References cited:
- EP-A1- 0 398 232
- EP-A1- 0 499 495
- WO-A-99/02048
- DE-A1- 3 908 365
- DE-A1- 4 302 474
- DE-A1- 19 827 269
- JP-A- 1 043 175
- JP-A- 3 091 680
- JP-A- 5 005 585
- JP-A- 56 169 544
- JP-A- 63 207 973
- US-A- 4 961 322
- US-A- 5 156 009
- US-A- 5 451 248

## Description

The present invention relates to a cooling device comprising a storage compartment containing nitrogen-enriched air that provides the storing of the food items placed inside without being deteriorated.

The most suitable medium for the growth and reproduction of microorganisms is the food that is kept uncovered. When the necessary precautions are not taken in storing food, the microorganisms multiply rapidly leading to the deterioration and the forming of bad odors due to decaying. Storing food in the cooling devices prolong the time period for the deterioration of food, however, completely eradicating the microorganisms that deteriorate food is not possible.

There is a considerable effect of the ambient air on the stored foods. Particularly the ambient oxygen and the moisture content should be kept under control for storing food for a long period of time without deterioration. All the fresh vegetables and fruits continue respiration after the harvest; that is, they take in oxygen from the medium and give off carbon dioxide and water vapor. Most of vegetables and fruits ripen after the harvest. This ripening process can be prolonged by storing the food in cold places thus slowing down the metabolism and the respiration of the product. The respiration and ripening during the storing process can be further prolonged by reducing the ambient oxygen content to provide the storing of fresh food products without deterioration for a longer period of time.

Various insulated storage chambers provided with enriched nitrogen gas have been designed for use in the cooling compartments of the cooling devices in order to store food for a longer period of time. In these implementations, the nitrogen gas amount inside the storage compartment is increased while the oxygen gas amount is decreased. The growth of aerobic microorganisms is prevented since the amount of the oxygen gas is decreased and the deterioration of the food is prevented. Furthermore, since the nitrogen gas does not react under normal conditions, there is not an adverse effect on the stored food items.

A cooling device according to the preamble of independent Claim 1 is disclosed in the documents, WO99/02048, DE19827269, US5156009, JP01043175, JP03091680, DE3908365, EP0398232, JP56169544, DE4302474, JP63207973, EP0499495, JP05005585, US4961322 and US5451248.

In state-of-the-art United States Patent no. 4961322, a fresh food storing device is described which comprises a storing compartment for storing fresh foods and which is provided with enriched-nitrogen by a nitrogen generator, wherein the temperature, humidity and the gas contents are controlled.

The object of the present invention is to design a cooling device comprising a storage compartment containing nitrogen-enriched air which enables prolonging the shelf lives of the foods stored inside by preventing their deterioration in a short period of time.

The cooling device designed to fulfill the objectives of the present invention, explicated in the first and the respective claims, comprises a storage compartment insulated from the outer environment, containing homogeneously distributed nitrogen-enriched air, wherein the humidity and gas contents of the air inside is controlled.

The storage compartment is separated into two parts by a separator, being in communication with each other, such that there is an inlet on one side through which the air from the nitrogen generator is blown, and on the other side an outlet for suction. The air which tends to head for the outlet just after leaving the inlet when there is no separator is made to travel the distance along the separator within the storage compartment as the separator separates the inlet and the outlet, and after passing beyond the separator, enters the part of the outlet to be aspirated. Consequently, the nitrogen-enriched air blown from the nitrogen generator circulates through the storage compartment before being discharged.

In this implementation, when the flow rate of the air blown into the storage compartment by the nitrogen generator is low, it takes relatively a longer time for the air blown into the storage compartment to pass beyond the separator and reach the other side where the outlet is situated. In another embodiment of the present invention, openings of various numbers, sizes and shapes are situated on the separator in order to solve this problem. By providing the air blown with a low flow rate to pass to the suction part of the storage compartment in a short period of time, the humidity and gas concentration change between the parts separated by the separator where the inlet and the outlet are situated is minimized.

The sizes and the density of the openings on the separator increase on parts away from the inlet and outlet. Accordingly, the humidity and the gas concentration ratios of the air on both parts are minimized and also the air blown into the storage compartment is thus distributed homogeneously throughout the storage compartment.

The cooling device designed to fulfill the objectives of the present invention is illustrated in the attached figures, where:
Figure 1 - is the side schematic view of a cooling device.
Figure 2 - is the schematic view of a storage compartment and a nitrogen generator.
Figure 3 - is the schematic view of a storage compartment and a nitrogen generator in another embodiment of the present invention.
Figure 4 - is the schematic view of a storage compartment in another embodiment of the present invention.

Elements shown in figures are numbered as follows:
1. Cooling device
2. Storage compartment
3. Nitrogen generator
4. Pump
5. Inlet
6. Outlet
7. Separator
8. Opening
9. Guide

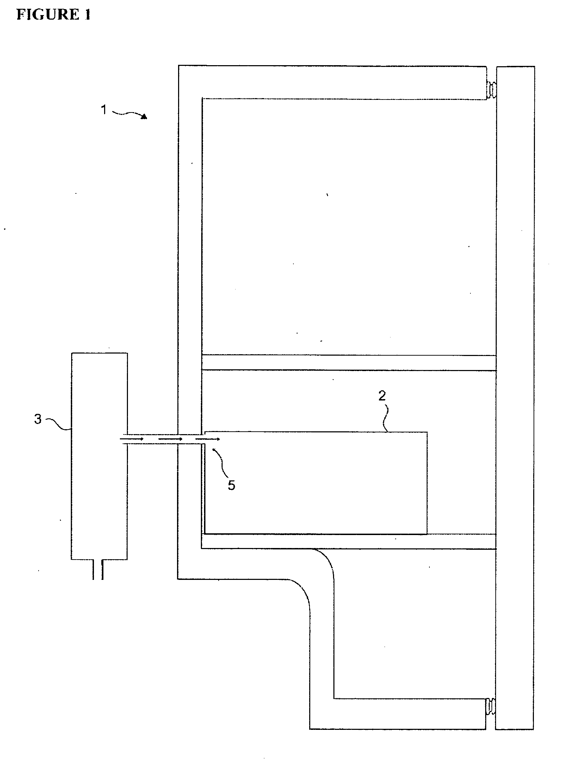

The cooling device (1) of the present invention comprises a nitrogen generator (3) and a storage compartment (2), containing the nitrogen enriched air, into which the nitrogen-enriched air generated by the nitrogen generator (3) is delivered, bounded by the top, bottom, lateral, front and the back walls, insulated from the outer environment (Figure 1).

The nitrogen generator (3) comprises a pump (4) that provides air suction from both the outer surroundings and the storage compartment (2) and to pump the nitrogen-enriched air.

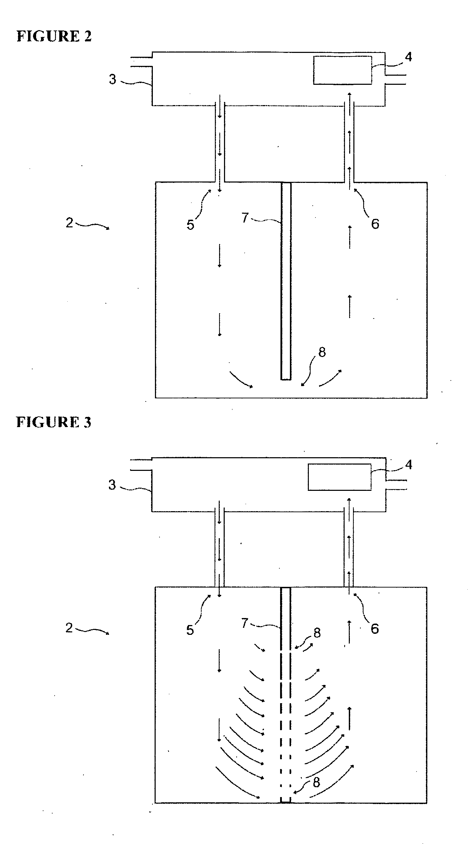

The storage compartment (2) comprises an inlet (5) through which the nitrogen-enriched air produced by the nitrogen generator (3) is blown in, an outlet (6) through which the air is aspirated by the pump (4), and a separator (7) that separates the storage compartment (2) into at least two parts such that the inlet (5) and the outlet (6) are on separate sides, providing the time duration of the air blown through the inlet (5) to reach the outlet (6) and accordingly the time duration it stays in the storage compartment (2) is increased by forming a barrier between the inlet (5) and the outlet (6) (Figure 2).

The storage compartment (2) comprises one or more openings (8), situated on the separator (7) or in between itself and the separator (7), providing the air blown through the inlet (5) to pass into the part wherein the outlet (6) is situated.

The separator (7) extends along two opposite walls of the storage compartment (2), for example, in between the front and the rear walls. The inlet and the outlet (5 and 6) are situated on the rear wall of the storage compartment (2). The height of the separator (7) is equal to the height of the storage compartment (2), consequently it joins preferably the top and bottom walls of the storage compartment (2).

The nitrogen-enriched air produced by the nitrogen generator (3) is blown into the storage compartment (2) through the inlet (5) on the storage compartment (2). The air entering the storage compartment (2) with a certain flow rate, flows in the storage compartment (2) along the separator that separates the inlet (5) and the outlet (6) in consequence of the separator (7) separating the inlet (5) and the outlet (6) and when it reaches the opening (8) passes from the part wherein the inlet (5) is situated to the part wherein the outlet (6) is situated and is discharged out of the storage compartment (2) from the outlet (6).

In one embodiment of the present invention, the length of the separator (7) is a shorter than the length of the storage compartment (2) therefore it cannot join the two walls of the storage compartment (2). Since the separator (7) does not join with this wall, there is an opening (8) between the separator (7) and the wall, through which the air blown from the inlet (5) can pass to the part wherein the outlet (6) is situated. In this embodiment of the present invention, the height of the separator (7) is equal to the height of the storage compartment (2), joining the top and the bottom walls of the storage compartment (2) (Figure 2).

In another embodiment of the present invention, the opening (8) is situated on the separator (7) and the sizes and numbers of the openings (8) change in relation to their distance from the inlet (5). The sizes and the numbers of the openings (8) increase as they get farther away from the inlet (5). Accordingly, the air entering the storage compartment (2) passes to the part wherein the outlet (6) is situated after it reaches the farthest point it can reach in the storage compartment (2) providing the air blown into the storage compartment (2) to be distributed homogeneously within the entire storage compartment (2) (Figure 3).

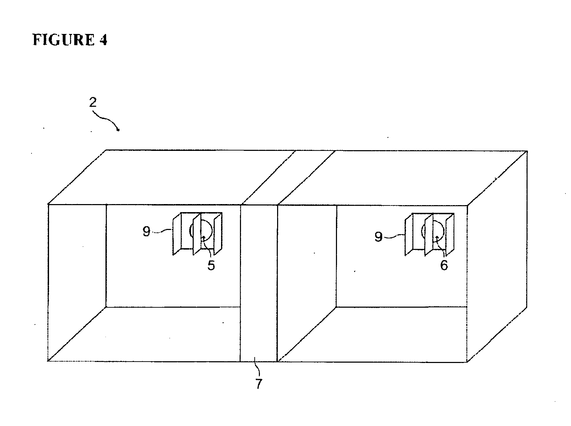

In another embodiment of the present invention, the storage compartment (2) comprises one or more guides (9) particularly on the inlet and the outlet (5 and 6) that extend into the storage compartment (2) for the purpose of providing the homogeneous distribution of the nitrogen-enriched air through the entire storage compartment (2) (Figure 4).

In another embodiment of the present invention, the separator (7) can be mounted or dismounted in the storage compartment (2) by the user and can be positioned in different arrangements.

By way of the present invention, the distribution of the humidity and gas concentration ratios is provided to be homogeneous in the storage compartment (2).

## Claims

1. A cooling device (1) comprising a nitrogen generator (3) producing nitrogen-enriched air, **characterized by** a storage compartment (2) containing nitrogen-enriched air, having an inlet (5) that is situated on the rear wall of the storage compartment (2) through which the nitrogen-enriched air produced by the nitrogen generator (3) is blown in, an outlet (6) that is situated on the rear wall of the storage compartment (2) through which the air is discharged and a separator (7) which extends along two opposite walls of the storage compartment (2), that separates the storage compartment (2) into at least two parts such that the inlet (5) and the outlet (6) are situated on separate parts, forming a barrier between the inlet (5) and the outlet (6) so that the time duration of the air blown through the inlet (5) to reach the outlet (6) is increased.

2. A cooling device (1) as in Claim 1, **characterized by** a storage compartment (2) comprising one or more openings (8) situated on the separator (7) or in between itself and the separator (7), that provide the air blown in through the inlet (5) to pass to the part wherein the outlet (6) is situated.

3. A cooling device (1) as in Claim 2, **characterized by** a storage compartment (2) comprising openings (7) situated on the separator (7), with sizes and numbers that increase as they get farther away from the inlet (5).

4. A cooling device (1) as in any one of the above claims, **characterized by** a storage compartment (2) comprising a separator (7) that joins the top and bottom walls of the storage compartment (2), having a height equal to the height of the storage compartment (2).

5. A cooling device (1) as in any one of the above claims, **characterized by** a storage compartment (2) comprising a separator (7) that does not join the two walls of the storage compartment (2), having a length shorter than the length of the storage compartment (2).

6. A cooling device (1) as in any one of the above claims, **characterized by** a storage compartment (2) comprising one or more guides (9), situated on the inlet and the outlet (5 and 6) extending into the storage compartment (2).

7. A cooling device (1) as in any one of the above claims, **characterized by** a storage compartment (2) comprising a separator (7) that can be mounted or dismounted inside by the user and positioned in different arrangements.

## Patentansprüche

1. Kühlvorrichtung (1), umfassend einen Stickstoffgenerator (3), der mit Stickstoff angereicherte Luft erzeugt, **gekennzeichnet durch** ein Lagerungsfach (2), das mit Stickstoff angereicherte Luft enthält, mit einem Einlass (5), der an der Rückwand des Lagerungsfachs (2) angeordnet ist und **durch** den die mit Stickstoff angereicherte Luft, die von dem Stickstoffgenerator (3) erzeugt wird, eingeblasen wird, und einem Auslass (6), der an der Rückwand des Lagerungsfachs (2) angeordnet ist und **durch** den die Luft agelassen wird, und ein Trennelement (7), das sich an zwei gegenüberliegenden Wänden des Lagerungsfachs (2) erstreckt und das das Lagerungsfach (2) in wenigstens zwei Teile unterteilt, derart, dass der Einlass (5) und der Auslass (6) in separaten Teilen angeordnet sind, und das eine Barriere zwischen dem Einlass (5) und dem Auslass (6) bildet, derart, dass sich die Zeit erhöht, die die **durch** den Einlass (5) eingeblasene Luft benötigt, um den Auslass (6) zu erreichen.

2. Kühlvorrichtung (1) nach Anspruch 1, **gekennzeichnet durch** ein Lagerungsfach (2), das eine oder mehrere Öffnungen (8) umfasst, die an dem Trennelement (7) oder zwischen sich und dem Trennelement (7) angeordnet sind und die dafür sorgen, dass die **durch** den Einlass (5) eingeblasene Luft zu dem Teil gelangt, in dem der Auslass (6) angeordnet ist.

3. Kühlvorrichtung (1) nach Anspruch 2, **gekennzeichnet durch** ein Lagerungsfach (2), das Öffnungen (8) umfasst, die an dem Trennelement (7) angeordnet sind und deren Größe und Anzahl mit zunehmendem Abstand vom Einlass (5) zunimmt.

4. Kühlvorrichtung (1) nach einem der vorangehenden Ansprüche, **gekennzeichnet durch** ein Lagerungsfach (2), das ein Trennelement (7) umfasst, das die obere und die untere Wand des Lagerungsfachs (2) verbindet und dessen Höhe gleich der Höhe des Lagerungsfachs (2) ist.

5. Kühlvorrichtung (1) nach einem der vorangehenden Ansprüche, **gekennzeichnet durch** ein Lagerungsfach (2), das ein Trennelement (7) umfasst, das die obere und die untere Wand des Lagerungsfachs (2) nicht verbindet und dessen Höhe geringer als die Höhe des Lagerungsfachs (2) ist.

6. Kühlvorrichtung (1) nach einem der vorangehenden Ansprüche, **gekennzeichnet durch** ein Lagerungsfach (2), das eine oder mehrere Führungen (9) umfasst, die am Einlass und am Auslass (5 und 6) angeordnet sind und sich in das Lagerungsfach (2) hinein erstrecken.

7. Kühlvorrichtung (1) nach einem der vorangehenden Ansprüche, **gekennzeichnet durch** ein Lagerungsfach (2), das ein Trennelement (7) umfasst, das vom Benutzer angebracht oder abgenommen werden und in unterschiedlichen Anordnungen positioniert werden kann.

## Revendications

1. Un dispositif de refroidissement (1) comprenant un générateur d'azote (3) qui produit l'air enrichi en azote, **caractérisé par** un compartiment de stockage (2) qui contient l'air enrichi en azote et qui présente une entrée (5) qui est située sur la paroi arrière du compartiment de stockage (2), à travers laquelle l'air enrichi en azote produit par le générateur d'azote (3) est soufflé dedans, une sortie (6) qui est située sur la paroi arrière du compartiment de stockage (2), à travers laquelle l'air est déchargé et un séparateur (7) qui s'étend le long de deux parois opposées du compartiment de stockage (2) et qui sépare le compartiment de stockage (2) en au mois deux parties de telle sorte que l'entrée (5) et la sortie (6) sont situées aux parties différentes en formant une barrière entre l'entrée (5) et la sortie (6) de telle sorte que la durée requise pour que l'air soufflé à travers l'entrée (5) atteint la sortie (6) est augmentée.

2. Un dispositif de refroidissement (1) selon la Revendication 1, **caractérisé par** un compartiment de stockage (2) comprenant une ou plusieurs ouvertures (8) situées sur le séparateur (7) ou entre lui-même et le séparateur (7), qui permet le passage de l'air soufflé à travers l'entrée (5) à la partie où la sortie (6) est située.

3. Un dispositif de refroidissement (1) selon la Revendication 2, **caractérisé par** un compartiment de stockage (2) comprenant des ouvertures (8) situées sur le séparateur (7) dont les tailles et le nombre augmentent comme elles s'éloignent de l'entrée (5).

4. Un dispositif de refroidissement (1) selon l'une quelconque des revendications précédentes, **caractérisé par** le compartiment de stockage (2) comprenant un séparateur (7) qui joint les parois supérieure et inférieure du compartiment de stockage (2), ayant une hauteur égale à l'hauteur du compartiment de stockage (2).

5. Un dispositif de refroidissement (1) selon l'une quelconque des revendications précédentes, **caractérisé par** le compartiment de stockage (2) comprenant un séparateur (7) qui ne joint pas les parois supérieure et inférieure du compartiment de stockage (2), ayant une longueur plus courte que la longueur du compartiment de stockage (2).

6. Un dispositif de refroidissement (1) selon l'une quelconque des revendications précédentes, **caractérisé par** un compartiment de stockage (2) comprenant un ou plusieurs guides (9) qui sont situés sur l'entrée et la sortie (5 et 6), s'étendant dans le compartiment de stockage (2).

7. Un dispositif de refroidissement (1) selon l'une quelconque des revendications précédentes, **caractérisé par** un compartiment de stockage (2) comprenant un séparateur (7) qui peut être monté ou démonté dedans par l'utilisateur et positionné dans des dispositions différentes.
